# EUROPÄISCHE PATENTSCHRIFT

(11) **EP 1 787 049 B1**
(45) Veröffentlichungstag und Bekanntmachung des Hinweises auf die Patenterteilung: **28.10.2009**
(21) Anmeldenummer: 05792510.9
(22) Anmeldetag: 30.08.2005
(51) Int. Cl.: F16K 11/083, F02M 25/07

(54) **DREHKOLBENVENTIL UND ABGASRÜCKFÜHRSYSTEM MIT EINEM SOLCHEN VENTIL**
ROTARY PISTON VALVE AND EXHAUST GAS RETURN SYSTEM COMPRISING SUCH A VALVE
SOUPAPE DE PISTON ROTATIF ET SYSTEME DE RETOUR DES GAZ D'ECHAPPEMENT COMPRENANT UNE SOUPAPE DE CE TYPE

(30) Priorität: 30.08.2004 DE 102004042109
(43) Veröffentlichungstag der Anmeldung: 23.05.2007
(73) Patentinhaber: Behr GmbH & Co. KG, 70469 Stuttgart (DE)
(72) Erfinder: MERCZ, József, 73525 Schwäbisch Gmünd (DE); ROSIN, Jürgen, 73630 Remshalden (DE); STIEGLER, Martin, 73110 Hattenhofen (DE); TOTH, Gyula, H-1037 Budapest (HU)
(74) Vertreter: Mantel, Berthold Friedrich
(86) Internationale Anmeldenummer: PCT/EP2005/009339
(87) Internationale Veröffentlichungsnummer: WO 2006/024495

(56) Entgegenhaltungen:
- EP-A- 1 363 013
- DE-A1- 10 133 182
- DE-A1- 10 243 728
- DE-A1- 10 321 638
- DE-A1- 19 834 575
- GB-A- 530 592

## Beschreibung

Die Erfindung betrifft ein Drehkolbenventil, gemäß dem Oberbegriff des Anspruches 1, sowie ein Abgasrückführsystem, in welchem mindestens ein entsprechendes Ventil angeordnet ist.

Aus der DE 103 21 637 A1 und der DE 103 21 638 A1 ist eine Einrichtung zur Regelung der Temperatur und der Quantität des zurückgeführten Abgases bei Verbrennungsmotoren bekannt, bei der ein Ventilgehäuse eines Regelventils einem Wärmetauscher oder Wärmetauscherteil angeschlossen oder verbunden ist. Das Regelventil wird insbesondere mittels eines elektrischen Betätigungselements betätigt, an dessen Eingang ein von den Motorparametern abhängiges Eingangssignal anliegen kann. Die Zuflussverbindung des Ventilgehäuses steht mit einem Zuflussspalt oder einer Zuflussöffnung in gasdurchleitender Verbindung. Der Zuflussspalt ist in den das drehbare/verschiebbare Regelungselement enthaltenden Durchfließraum des Ventilgehäuses des Regelventils aufgenommen oder untergebracht. Der erste Ausflussspalt des Durchfließraumes steht mit dem Zuflussquerschnitt der Abgasleitung durch einen überleitenden Raum in Verbindung. Der zweite Ausflussspalt des Durchfließraumes steht mit einem Zuflussquerschnitt des Wärmetauschers durch den Verteilerraum in Verbindung. Der Zuflussspalt wird in der Mittelstellung des drehbaren/verschiebbaren Regelungselementes durch eine Fläche, wie eine Zylinderfläche, geschlossen. In der ersten angesteuerten Stellung steht gasdurchleitend der Zuflussspalt mit dem ersten Ausflussspalt in Richtung Abgasleitung in Verbindung. In der zweiten angesteuerten Stellung steht gasdurchleitend der Zuflussspalt mit dem zweiten Ausflussspalt in Richtung Wärmetauscher in Verbindung. Das Regelungselement wird durch einen Körper mit zylindrischer Grundgestalt gebildet, welcher in einem zylinderförmigen Aufnahmeraum drehbar angeordnet ist. Der Körper bei der verdrehbaren Ausführungsform ist an einem Ventilschaft angeordnet und weist zwei Kanten zur Steuerung auf, wobei die beiden Kanten von Raumkurven, welche auf der Mantelfläche verlaufen, gebildet werden.

Aus der DE 198 34 575 A1 ist ein Drehschieberventil für eine Heizungsanlage bekannt, bei dem durch ein Drehküken die über eine Zuflussöffnung zuströmende Warmwassermenge entweder einer Abflussleitung oder einem Bypass zugesteuert wird. Es wird vorgeschlagen, dass bei geschlossenem Bypass über eine Steueröffnung bei weiterem Verdrehen über einen bestimmten Verdrehwinkel des Drehkükens die der Heizung dienende Warmwassermenge änderbar ist.

Es ist Aufgabe der Erfindung, ein Ventil der eingangs genannten Art zu verbessern.

Diese Aufgabe wird gelöst durch ein Ventil mit den Merkmalen des Anspruchs 1. Vorteilhafte Ausgestaltungen sind Gegenstand der Unteransprüche.

Das Ventil, das ein drehbar im Ventilsitz angeordnetes Regelungselement aufweist, ist erfindungsgemäß derart ausgelegt, dass es die Durchflussmenge des durch eine erste Öffnung dem Ventil zugeführten Fluids in einem ersten Winkelstellungsbereich bei verschlossener zweiter Öffnung in Form einer reinen Durchflussregelung zu einer dritten Öffnung, in einem anschließenden, zweiten Winkelbereich in Form einer Regelung der Fluidverteilung auf die zweite und dritte Öffnung und im hieran anschließenden dritten Winkelbereich in Form einer reinen Regelung des freien Querschnitts der zweiten Öffnung bei vollständig geschlossener dritter Öffnung regelt. Das drehbar im Ventilsitz angeordnete Regelelement weist hierbei bevorzugt eine konische Mantelfläche auf, mit Hilfe derer es die erste Öffnung ganz oder, vorzugsweise stufenlos, teilweise verschließt oder freigibt.

Der Zusammenhang zwischen der Winkelstellung des Regelelements und dem für das Durchströmen des Fluids freigegebenen Querschnitt im Bereich des ersten Winkelbereichs und/oder des dritten Winkelbereichs ist im Wesentlichen linear, wobei jedoch insbesondere im Anfangs- und/oder Endbereich der linearen Regelung leichte Abweichungen von der Linearität auftreten können.

Bevorzugt ist ein absolutes Maximum des freigegebenen Querschnitts zwischen dem ersten und dem zweiten Winkelbereich vorgesehen. Insbesondere bei einer Verwendung des Ventils für die Regelung eines rückgeführten Abgasstroms ist das Vorhandenseins eines Maximums bei der vollständigen Öffnung des Auslasses zum Abgaskühler und dem hiermit verbundenen geringen Druckabfall sinnvoll.

Bevorzugt ist im zweiten Winkelbereich der insgesamt freigegebene Querschnitt im Wesentlichen konstant.

Die Erfindung betrifft auch ein Abgasrückführsystem mit einer Brennkraftmaschine, insbesondere einem Motor, der beziehungsweise dem an einer Entnahmestelle abgezweigtes und über eine Rückführstelle zurückgeführtes Abgas zugeführt wird. Die oben angegebene Aufgabe ist bei dem Abgasrückführsystem dadurch gelöst, dass zwischen die Entnahmestelle und die Rückführstelle eine Wärmeübertragerventileinrichtung mit einem vorab beschriebenen Ventil geschaltet ist.

Ein bevorzugtes Ausführungsbeispiel des Abgasrückführsystems ist **dadurch gekennzeichnet, dass** die Wärmeübertragerventileinrichtung mit einer Abgaskühleinrichtung verbunden ist. Die Abgaskühleinrichtung dient dazu, die Temperatur des rückgeführten Abgases abzusenken. Die Wärmeübertragerventileinrichtung kann stoffschlüssig oder mechanisch an die Abgaskühleinrichtung angebunden sein.

Ein weiteres bevorzugtes Ausführungsbeispiel des Abgasrückführsystems ist **dadurch gekennzeichnet, dass** die Wärmeübertragerventileinrichtung in die Abgaskühleinrichtung integriert ist. Es ist zum Beispiel vorteilhaft, wenn das Gehäuse beziehungsweise die Abströmseite der Wärmeübertragerventileinrichtung direkt den Eintritts- beziehungsweise Austrittsdiffusor der Abgaskühleinrichtung bildet.

Ein weiteres bevorzugtes Ausführungsbeispiel des Abgasrückführsystems ist **dadurch gekennzeichnet, dass** die Wärmeübertragerventileinrichtung stoffschlüssig mit der Abgaskühleinrichtung verbunden ist. Alternativ kann die Wärmeübertragerventileinrichtung mechanisch mit der Abgaskühleinrichtung verbunden sein.

Ein weiteres bevorzugtes Ausführungsbeispiel des Abgasrückführsystems ist **dadurch gekennzeichnet, dass** die Wärmeübertragerventileinrichtung einen Bypass aufweist. Der Bypass dient dazu, zum Beispiel bei einem Kaltstart des Motors, das rückgeführte Abgas ungekühlt an der Abgaskühleinrichtung vorbeizuleiten.

Ein weiteres bevorzugtes Ausführungsbeispiel des Abgasrückführsystems ist **dadurch gekennzeichnet, dass** die Abgaskühleinrichtung einen U-Flow-Kühler umfasst. Der U-Flow-Kühler ist so an die Wärmeübertragerventileinrichtung angeschlossen, dass das zurückgeführte Abgas zum einen ungekühlt am Kühler vorbei durch die Wärmeübertragerventileinrichtung geleitet werden kann. Zum anderen kann das rückgeführte Abgas mittels der Wärmeübertragerventileinrichtung durch den U-Flow-Kühler hindurch geleitet und so abgekühlt rückgeführt werden. Der U-Flow-Kühler liefert den Vorteil, dass ein Bypass entfallen kann.

Ein weiteres bevorzugtes Ausführungsbeispiel des Abgasrückführsystems ist **dadurch gekennzeichnet, dass** die Wärmeübertragerventileinrichtung, in Strömungsrichtung von der Entnahmestelle zu der Rückführstelle betrachtet, stromaufwärts oder stromabwärts zu der Abgaskühleinrichtung angeordnet ist. Die Wärmeübertragerventileinrichtung kann demzufolge sowohl vor als auch hinter der Abgaskühleinrichtung angeordnet sein.

Ein weiteres bevorzugtes Ausführungsbeispiel des Abgasrückführsystems ist **dadurch gekennzeichnet, dass** die Wärmeübertragerventileinrichtung einen Hochtemperatur-Abgaskühler und einen Niedertemperatur-Abgaskühler umfasst. Je nach Anwendung kann die zweistufige Abkühlung vorteilhaft sein. Ein weiteres bevorzugtes Ausführungsbeispiel des Abgasrückführsystems ist **dadurch gekennzeichnet, dass** die Wärmeübertragerventileinrichtung, in Strömungsrichtung von der Entnahmestelle zu der Rückführstelle betrachtet, stromaufwärts oder stromabwärts zu dem Hochtemperatur-Abgaskühler oder dem Niedertemperatur-Abgaskühler angeordnet ist. Die Wärmeübertragerventileinrichtung kann also vor oder hinter dem Hochtemperatur-Abgaskühler beziehungsweise Niedertemperatur-Abgaskühler angeordnet sein. Die Wärmeübertragerventileinrichtung kann aber auch zwischen dem Hochtemperatur-Abgaskühler und dem Niedertemperatur-Abgaskühler angeordnet sein.

Ein weiteres bevorzugtes Ausführungsbeispiel des Abgasrückführsystems ist **dadurch gekennzeichnet, dass** das Abgasrückführsystem von einem Hochdruck-Abgasrückführsystem gebildet wird. Das Hochdruck-Abgasrückführsystem kann mit einer einstufigen oder mit einer zweistufigen Abkühlung ausgestattet sein.

Ein weiteres bevorzugtes Ausführungsbeispiel des Abgasrückführsystems ist **dadurch gekennzeichnet, dass** das Abgasrückführsystem von einem Niederdruck-Abgasrückführsystem gebildet wird. Das Niederdruck-Abgasrückführsystem kann mit einer einstufigen oder mit einer zweistufigen Abkühlung ausgestattet sein.

Im Folgenden wird die Erfindung anhand eines Ausführungsbeispiels mit verschiedenen Verwendungen in Abgasrückführsystemen unter Bezugnahme auf die Zeichnung im Einzelnen erläutert. In der Zeichnung zeigen:
- Fig. 1: eine perspektivische Ansicht auf ein erfindungsgemäßes Ventil,
- Fig. 2: eine andere perspektivische, geschnittene Ansicht des Ventils von Fig. 1,
- Fig. 3A-3C: Seitenansichten auf den Drehkolben aus unterschiedlichen Winkeln,
- Fig. 4A: eine schematische Darstellung zur Verdeutlichung des Grundprinzips in Form einer Explosionsdarstellung von Drehkolben und vereinfacht dargestelltem Ventilsitz,
- Fig. 4B: den Drehkolben und Ventilsitz von Fig. 4A im zusammengebauten Zustand zur Verdeutlichung der Funktion der Steuerkante,
- Fig. 5: eine Regelkurve mit Darstellung der Ventilstellungen,
- Fig. 6A, 6B: perspektivische Darstellungen des Ventilgehäuses, wobei die Darstellung von Fig. 6B in Längsrichtung des Abgas-Eintrittes geschnitten dargestellt ist,
- Fig. 7: eine geschnittene perspektivische Detaildarstellung des Ventilschafts und dessen Führung und Abdichtung,
- Fig. 8: eine Variante des erfindungsgemäßen Ventils in perspektivischer Detaildarstellung des Ventilschafts und dessen Führung, wobei die Scheibe und die Hülse links seitlich zusätzlich in einer anderen Perspektive dargestellt sind,
- Fig. 9: eine perspektivische Ansicht der Betätigung des Ventils,
- Fig. 10: eine perspektivische Ansicht der Betätigung des Ventils gemäß einer alternativen Betätigungsform,
- Figur 11: ein Hochdruck-Abgasrückführsystem mit einer einstufigen Abkühlung, die einen Bypass umfasst,
- Fig. 12: ein Hochdruck-Abgasrückführsystem mit einer einstufigen Abkühlung mit einem U-Flow-Kühler,
- Fig. 13: ein Hochdruck-Abgasrückführsystem mit einer zweistufigen Abkühlung,
- Fig. 14: ein Niederdruck-Abgasrückführsystem mit einer einstufigen Abkühlung, die einen Bypass umfasst,
- Fig. 15: ein Niederdruck-Abgasrückführsystem mit einer einstufigen Abkühlung mit einem U-Flow-Kühler, und
- Fig. 16: ein Niederdruck-Abgasrückführsystem mit einer zweistufigen Abkühlung.

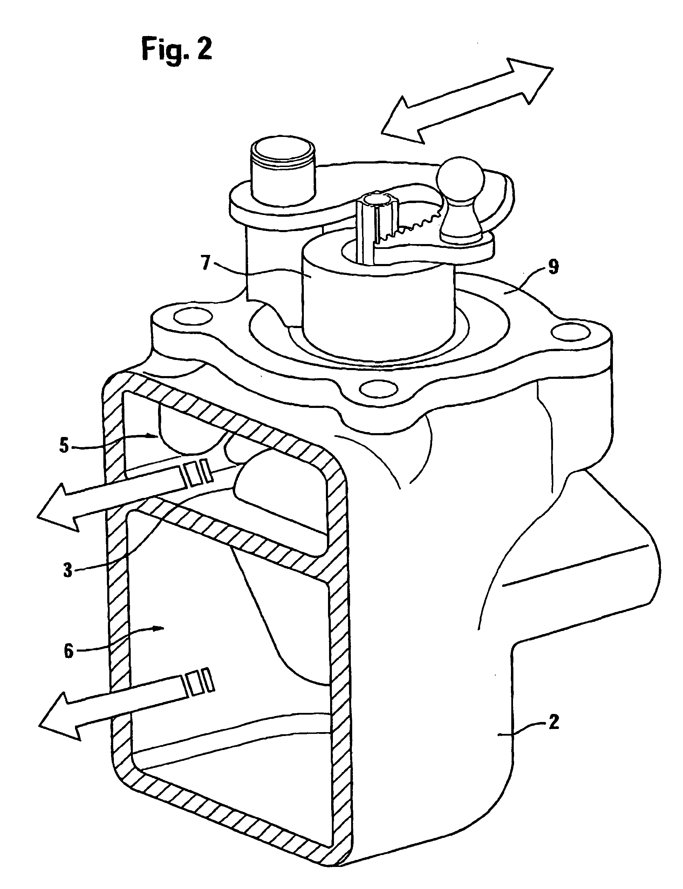

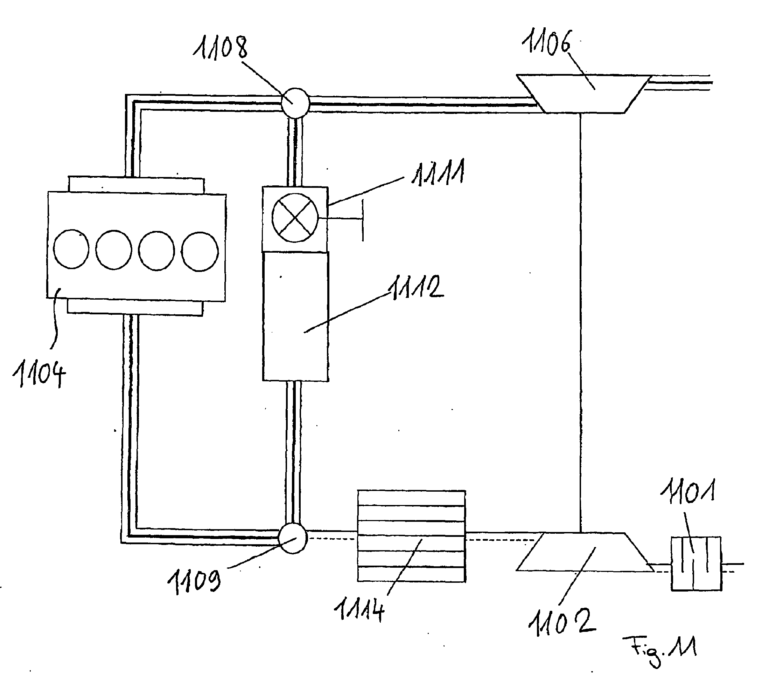

Ein Drehkolbenventil 1 zur Regelung der Temperatur und der Quantität des zurückgeführten Abgases bei Verbrennungsmotoren, wie unter Bezugnahme auf die Figuren 11 bis 16 an späterer Stelle anhand von sechs verschiedenen Anwendungen bei Abgasrückführungen beschrieben ist, bestehend aus einem Ventilgehäuse 2 und einem Regelungselement 3 in Form eines speziell ausgebildeten Drehkolbens ist mit seinem Ventilgehäuse 2 fest an einem Wärmetauscherteil angebracht, gemäß dem vorliegenden Ausführungsbeispiel angeschweißt. Dabei kann die Anbringung auch lösbar erfolgen, wie beispielsweise mit Hilfe von Schrauben. Die Richtung der Anbringung entspricht den beiden parallel zueinander verlaufenden Pfeilen in Fig. 2.

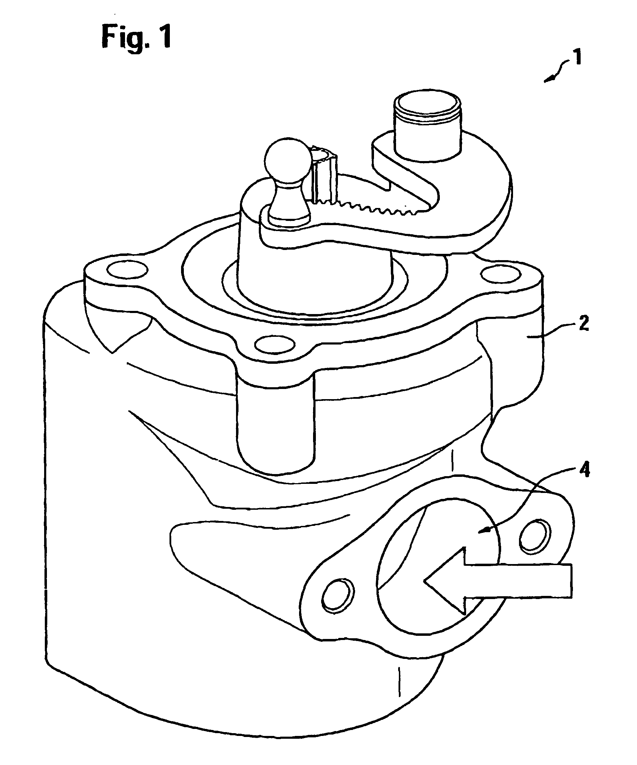

Im Ventilgehäuse 2 sind eine erste Öffnung 4 für den Abgas-Eintritt, in Fig. 1 durch einen Pfeil angedeutet, und, auf der dem Abgas-Eintritt gegenüberliegenden Seite, zwei weitere Öffnungen, nämlich eine in Fig. 2 oben durch einen Pfeil angedeutete zweite Öffnung 5 für den Bypass und eine in Fig. 2 unten durch einen zweiten Pfeil angedeutete dritte Öffnung 6, die zum Kühler (nicht dargestellt) führt, vorgesehen.

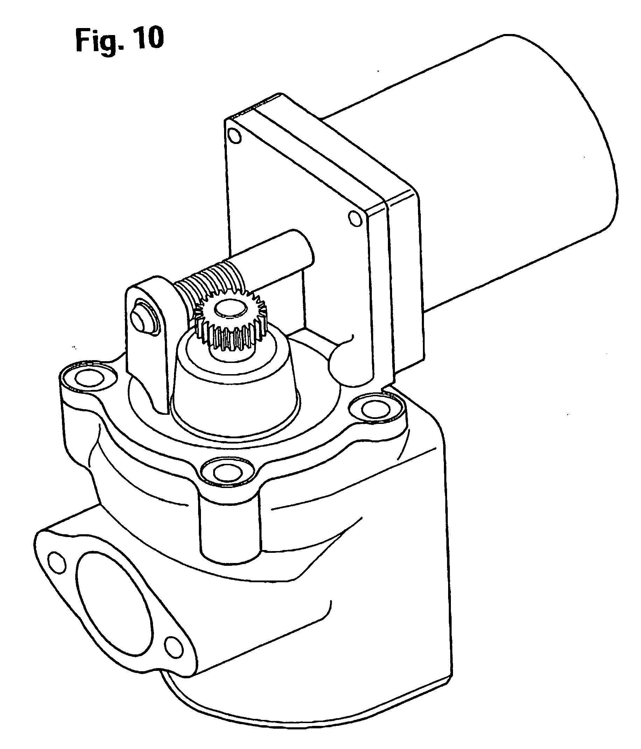

Das im Ventilgehäuse 2 angeordnete Regelungselement 3 weist einen Ventilschaft 7 auf, der mit einer Betätigungsvorrichtung 8 zur Regelung der Stellung des Regelungselements 3 im Ventilgehäuse 2 verbunden ist, in Fig. 2 oben dargestellt, wobei die Betätigung durch einen Doppelpfeil angedeutet ist. Der Ventilschaft 7 ragt hierbei durch einen das Ventilgehäuse 2 dicht verschließenden Deckel 9, welcher mittels vier Schrauben (nicht dargestellt) am Ventilgehäuse 2 angeschraubt ist. Hierbei ist bevorzugt eine Dichtung (nicht dargestellt), vorzugsweise eine Flachdichtung, zwischen dem Ventilgehäuse 2 und dem Deckel 9 vorgesehen. Die Betätigung erfolgt gemäß dem vorliegenden Ausführungsbeispiel mittels einer druckgeregelten Unterdruckdose. Gemäß einer Variante, die in Fig. 10 dargestellt ist, erfolgt die Betätigung mit Hilfe eines Elektromotors, dessen Abtrieb über ein Getriebe mit dem Ventilschaft 7 verbunden ist.

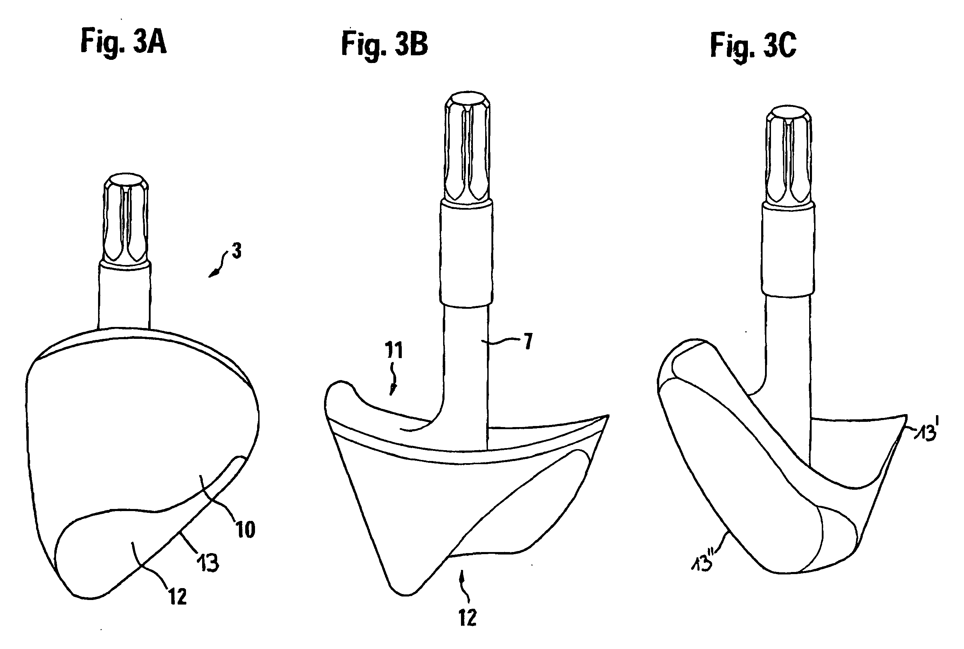

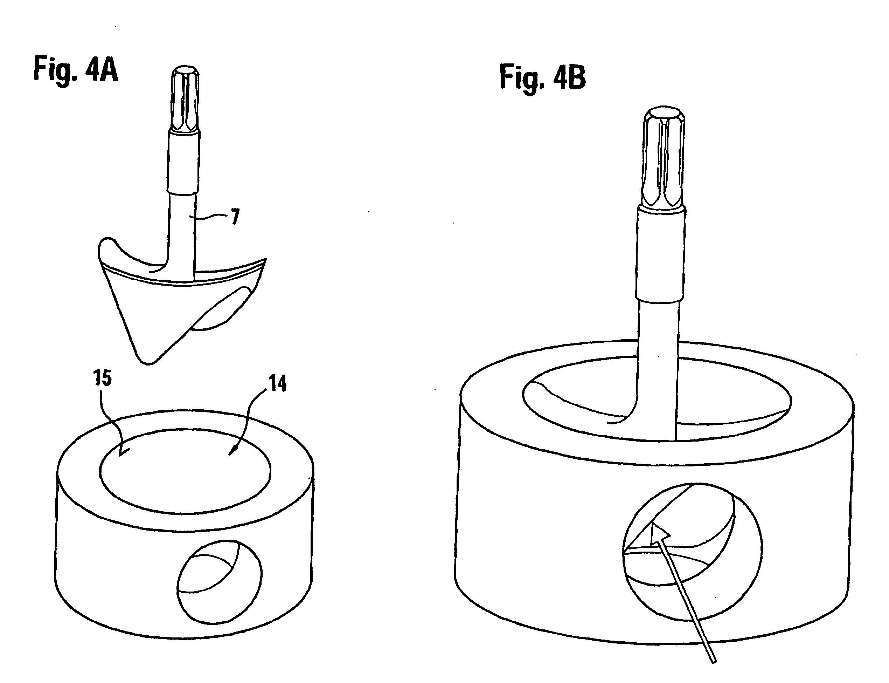

Das Regelungselement 3, welches eine konische Mantelfläche 10 mit einem Öffnungswinkel von 45° aufweist, welche koaxial zur Längsachse des Ventilschafts 7 angeordnet ist, weist auf der die konische Mantelfläche 10 abschließenden Oberseite 11 und Unterseite 12 jeweils eine entsprechend den Strömungsleitanforderungen gebogenen Verlauf auf (vgl. Fig. 3A bis 3C), wobei die Kanten 13 die Steuerkanten bilden, welche die Öffnungen 4, 5 und 6 im Ventilgehäuse 2 je nach Stellung des Regelungselements 3 ganz oder teilweise freigeben oder verschließen. Das Prinzip der Regelung ist in Fig. 4B dargestellt, in der eine der beiden Steuerkanten durch die Öffnung sichtbar ist. Bei einer Drehung des Ventilschafts 7 entgegen dem Uhrzeigersinn wird die Öffnung allmählich verschlossen, bei einer Drehung in Uhrzeigersinn wird die Öffnung weiter freigegeben, bis die Steuerkante von der anderen Seite wieder vor die Öffnung tritt und diese allmählich verschließt.

Um im geschlossen Zustand die entsprechende(n) Öffnung(en) dicht zu verschließen, ist im Ventilgehäuse 2 ein Ventilsitz 14 vorgesehen, der mit einer entsprechend der konischen Mantelfläche 11 ausgebildeten konischen Mantelfläche 15 versehen ist, durch welche die erste Öffnung 4 dringt. Der Öffnungswinkel beträgt vorliegend ebenfalls 45°. Die zweite Öffnung 5 ist mit dem Bereich oberhalb der konischen Mantelfläche 15 und die dritte Öffnung 6 ist mit dem Bereich unterhalb der konischen Mantelfläche 15 räumlich verbunden.

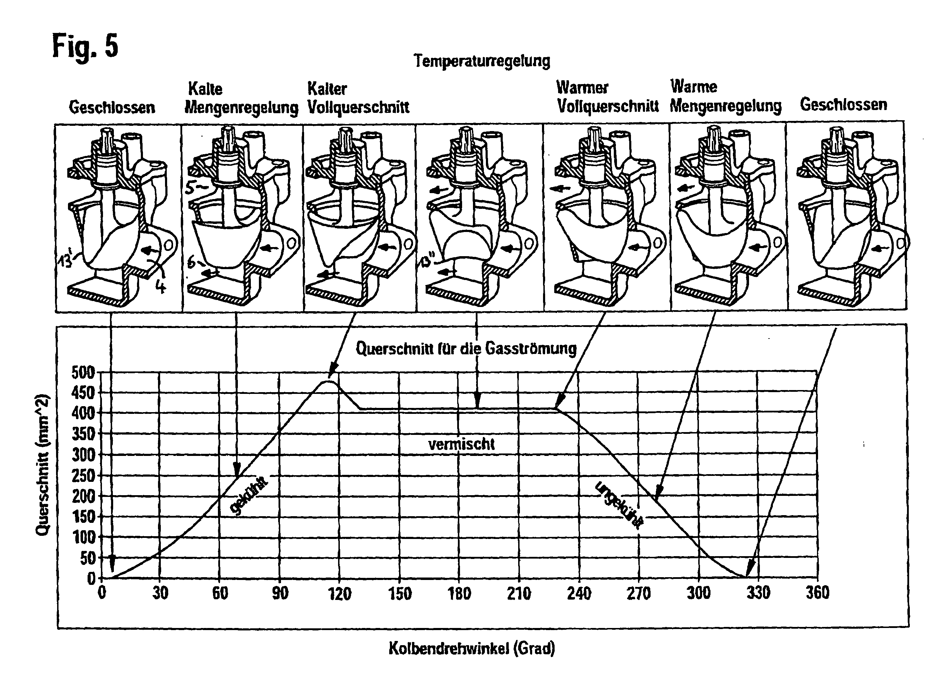

Durch diese Ausgestaltung des Drehkolbenventils 1 kann das Regelungselement 3 die Funktion eines Absperrventils und gleichzeitig die Funktion einer Verteilerklappe erfüllen, so dass nur ein Regelungselement 3 erforderlich ist. Eine Darstellung des freien Querschnitts für die Gasströmung über dem Drehwinkel des Regelungselements 3 ist in Fig. 5 dargestellt, wobei im oberen Bereich von Fig. 5 das Drehkolbenventil 1 zur Verdeutlichung der Ausgestaltung des Drehkolbens in verschiedenen Stellungen geschnitten dargestellt ist, wobei die dargestellte Stellung mit einem Pfeil auf die entsprechende Stelle im Diagramm gekennzeichnet ist.

Links ist die vollständig geschlossene Stellung, kurz vor dem Öffnen des Kaltluftkanals (d.h. der unteren, dritten Öffnung 6), dargestellt, welche vorliegend einem Drehwinkel von ca. 0° zugeordnet ist. Hierbei wird der Eintritt des Abgases durch die erste Öffnung 4 auf Grund der Stellung des Drehkolbens verhindert, welcher die erste Öffnung 4 vollständig verschließt.

Wie aus der Darstellung ersichtlich ist, erfolgt bei einem Drehwinkel von 0° bis ca. 130° eine "kalte" Mengenregelung, das heißt das Abgas gelangt - in vorliegend etwa linearem Zusammenhang zwischen freiem Querschnitt und Drehwinkel - durch die erste Öffnung 4 in das Drehkolbenventil 1 und durch die dritte Öffnung 6 zum Abgaskühler. Die zweite Öffnung 5 ist in diesem Drehwinkelbereich des Drehkolbens auf Grund des Verlaufs der oberen Kante 13', die im Bereich der ersten Öffnung 4 in Anlage an die konische Mantelfläche 15 des Ventilsitzes 14 oberhalb der ersten Öffnung 4 ist, vollständig geschlossen, so dass das Abgas ausschließlich durch die untere, dritte Öffnung 6 zum Kühler geleitet wird. Hierbei hat der freie Querschnitt bei einem Drehwinkel des Drehkolbens von ca. 110° sein absolutes Maximum, d.h. in dieser Stellung des Drehkolbens kann die größte Abgasmenge das Drehkolbenventil 1 durchströmen, wobei der gesamte Abgasstrom vorliegend ausschließlich zum Abgaskühler geleitet wird.

Bei einem Drehwinkel von ca. 130° bis 230° erfolgt eine Temperaturregelung, das heißt das Gas wird sowohl durch die zweite als auch durch die dritte Öffnung 5 bzw. 6 geleitet, wobei die untere, dritte Öffnung 6 mit zunehmenden Drehwinkel langsam geschlossen und die obere, zweite Öffnung 5 langsam geöffnet und bei einem Drehwinkel ab ca. 230° bis 360° die dritte Öffnung 6 vollständig geschlossen ist. Um dies zu ermöglichen, sind beide Kanten 13' und 13" im Bereich der ersten Öffnung 4 verlaufend angeordnet, so dass ein Vorbeiströmen des Abgases nach oben und unten möglich ist. Der Verlauf der Kanten 13 ist hierbei derart ausgelegt, dass der freie Querschnitt über den gesamten Winkelbereich konstant bleibt, so dass auch die das Drehkolbenventil 1 durchströmende Abgasmenge im Wesentlichen konstant ist.

Bei einem Drehwinkel von über 230° bis ca. 330° erfolgt eine "warme" Mengenregelung, das heißt das Abgas wird ausschließlich durch die zweite Öffnung 5 geleitet. Die dritte Öffnung 6 ist in diesem Drehwinkelbereich des Drehkolbens auf Grund des Verlaufs der unteren Kante 13", die in diesem Drehwinkelbereich unterhalb der ersten Öffnung 4 anliegt, vollständig geschlossen, so dass das Abgas ausschließlich durch die zweite Öffnung 5 und somit durch den Bypass, vorbei am Abgaskühler zum Bypass geleitet wird. Der freie Querschnitt nimmt in Abhängigkeit des Drehwinkels über den Winkelbereich der "warmen" Mengenregelung im Wesentlichen linear ab.

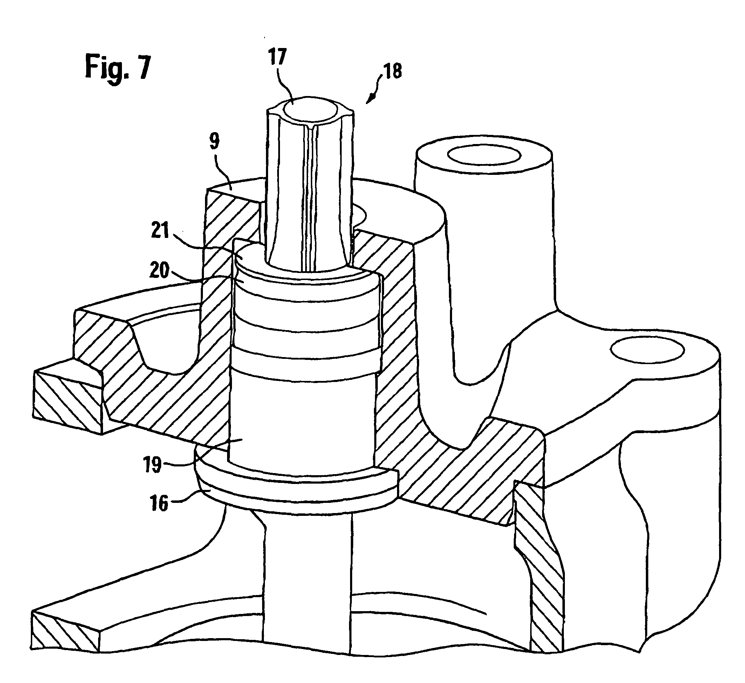

Der Ventilschaft 7 weist, wie in Fig. 7 dargestellt, einen flanschartig ausgebildeten Rand 16 und an seinem durch den Deckel 9 ragenden Endbereich 17 eine Verzahnung 18 auf. Auf den Ventilschaft 7 ist zur Führung und Abdichtung eine Hülse 19 und eine Scheibe 20 geschoben. Oberhalb der Scheibe 20 sind zwei Tellerfedern 21 angeordnet, die an der Innenseite des Deckels 9 anliegen und ein Spiel in Ventilschaft-Längsrichtung ausgleichen. Die Tellerfedern 21 bestehen beispielsweise aus Inconnel oder Waspalloy.

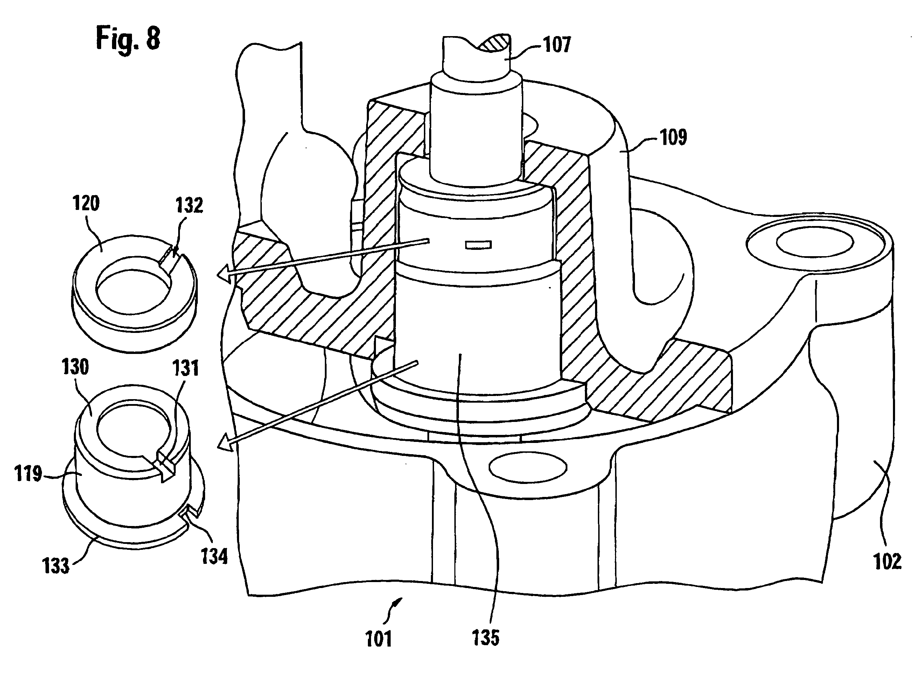

Gemäß einer in Fig. 8 dargestellten, bevorzugten reibungsärmeren Variante, bei der im Folgenden mit dem zuvor beschriebenen Ausführungsbeispiel übereinstimmende oder gleichwirkende Elemente mit um 100 höheren Bezugzeichen versehen sind, weist eine der Hülse 19 entsprechende Hülse 119 an ihrer an einer Scheibe 120 anliegenden Stirnfläche 130 eine mit abgeschrägten Seitenwänden in radialer Richtung verlaufende Nut 131 auf. Die Scheibe 120 weist ihrerseits einen in Richtung der Hülse 119 vorstehenden Bereich 132 auf, welcher in seiner Form derjenigen der Nut 131 entspricht.

Zur Positionierung der Hülse 119 im Ventilgehäuse 102 ist in einem seitlich überstehenden Randbereich 133 eine weitere Nut 134 vorgesehen, in welche ein am Deckel 109 ausgebildeter Vorsprung 135 ragt, so dass die Hülse 119 verdrehsicher auf dem Ventilschaft 107 sitzt. Die Hülse 119 ist zudem auf nicht näher dargestellte Weise fest mit dem Deckel 109 verbunden. Die Scheibe 120 ist auf nicht näher dargestellte Weise verdrehsicher mit dem Ventilschaft 107 verbunden.

Um die Reibung bei einer Drehung des Ventilschafts 107 zu vermindern, ist der Ventilschaft 107 und somit auch das Regelelement leicht, vorliegend um 0,1 mm, in axialer Richtung verschiebbar, wobei nur im geschlossenen Zustand die Mantelflächen von Regelelement und Ventilsitz aneinander anliegen. Die axiale Verschiebbarkeit wird durch das Zusammenspiel des vorstehenden Bereichs 132 der ventilschaftfesten Scheibe 120 und der Nut 131 in der ventilgehäusefesten Hülse 119 und die federnde Vorspannung der oberhalb der Scheibe 120 und entsprechend dem ersten Ausführungsbeispiel angeordneten Tellerfedern 121 ermöglicht. Die Tellerfedern 121 spannen die Scheibe 120 und somit den Ventilschaft 107 nach unten vor, so dass der vorstehende Bereich 132 stets in Anlage mit der oberen Stirnfläche 130 beziehungsweise der Nut 131 der Hülse 119 ist. Ist der vorstehende Bereich 132 in Anlage mit der oberen Stirnfläche 130, so wird der Ventilschaft 107 und somit auch das Regelelement um die Höhe des vorstehenden Bereichs 132 durch die ventilgehäusefeste Hülse 119 nach oben verschoben. Gelangt der vorstehende Bereich 132 in die Nut 131, so senkt sich der Ventilschaft 107 und somit auch das Regelelement bis zur vollständigen Anlage der beiden Mantelflächen ab und das Drehkolbenventil 101 ist vollständig geschlossen.

In den Figuren 11 bis 13 sind verschiedene Ausführungsbeispiele eines Hochdruck-Abgasrückführsystems vereinfacht dargestellt. Gleiche Teile sind mit gleichen Bezugszeichen versehen. Die Leistung eines Verbrennungsmotors hängt von Hubraum, Drehzahl und mittlerem Gasdruck ab. Durch eine Aufladung des Motors kann die Füllung erheblich verbessert und damit die Motorleistung gesteigert werden. Das Kraftstoff-Luftgemisch oder die Luft wird ganz oder teilweise außerhalb des Zylinders vorverdichtet. Bei einem Motor mit Abgasturbolader treiben die Abgase die Turbine und diese den Verdichter an. Der Verdichter übernimmt das Ansaugen und liefert dem Motor eine vorverdichtete Frischgasladung. Ein Ladeluftkühler in der Ladeleitung führt die Verdichtungswärme an die Umgebungsluft ab. Dadurch wird die Zylinderfüllung weiter verbessert.

Die Abgasrückführung dient dazu, das Abgas möglichst weit abzukühlen. Das zurückgeführte Abgas nimmt an der Verbrennung in der Brennkraftmaschine nicht mehr teil, erwärmt sich aber. Insgesamt wird durch das rückgeführte Abgas die Temperatur in der Brennkraftmaschine beziehungsweise dem Motor abgesenkt. Durch niedrige Temperaturen im Motor kann die Entstehung von Stickoxiden, die stark von der Temperatur im Motor abhängig ist, reduziert werden.

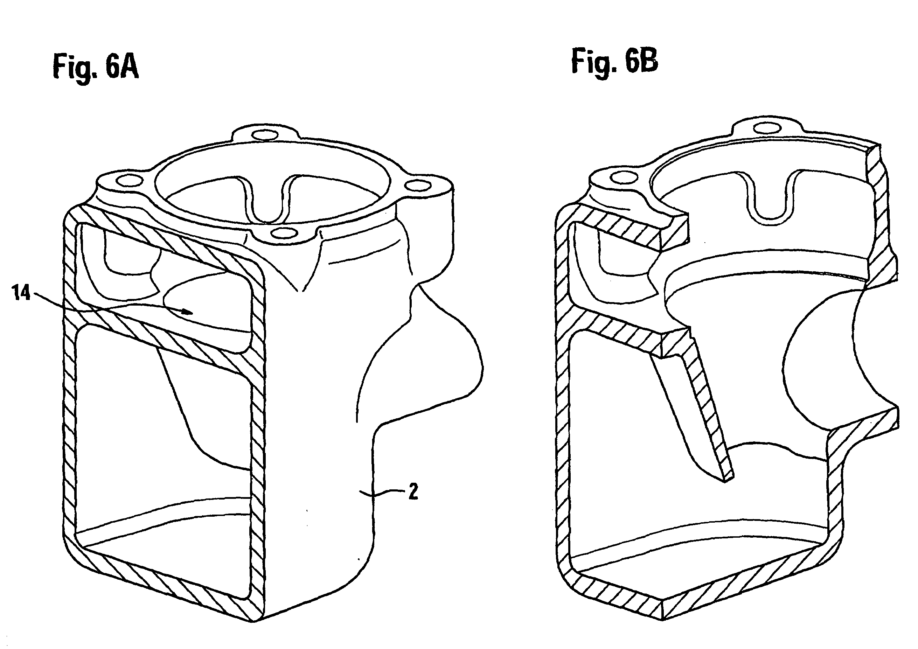

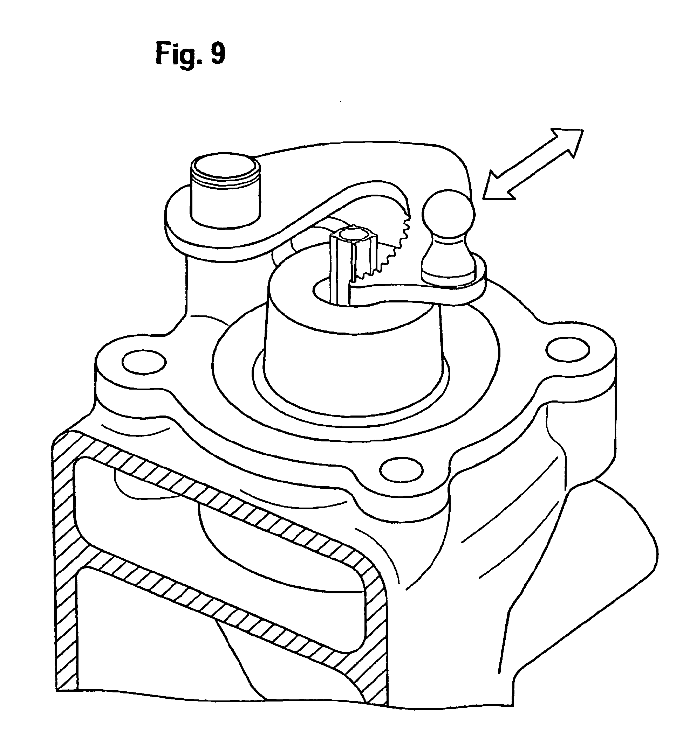

Das Kraftstoff-Luftgemisch wird über einen Luftfilter 1101 von einem Verdichter 1102 angesaugt und einem Motor 1104 zugeführt. Von dem Motor 1104 gelangt das Abgas zu einer Turbine 1106, die den Verdichter 1102 antreibt. Zwischen dem Motor 1104 und der Turbine 1106, die auch als Turboladerturbine bezeichnet wird, ist eine Entnahmestelle 1108 vorgesehen, die mit einer Rückführstelle 1109 in Verbindung steht. Über die Rückführstelle 1109 wird das Abgas wieder dem Motor 1104 zugeführt. Zwischen der Entnahmestelle 1108 und der Rückführstelle 1109 ist ein erfindungsgemäßes Ventil, insbesondere wie es unter Bezugnahme auf die Figuren 1 bis 10 beschrieben ist, und welches im Folgenden als Wärmeübertragerventil 1111 oder auch als Kombinationsventil bezeichnet wird, angeordnet. Das Kombinationsventil 1111 steht mit einem Abgaskühler 1112 in Verbindung, der einen Bypass umfasst. Dieser Bypass ist einteilig mit dem Kühlergehäuse ausgeführt. In einer weiteren nicht dargestellten Ausführung der Erfindung ist der Bypass als getrennte Rohrleitung ausgebildet, die insbesondere den Kühler umgeht. Zwischen den Verdichter 1102 und die Rückführstelle 1109 ist ein Ladeluftkühler 1114 geschaltet.

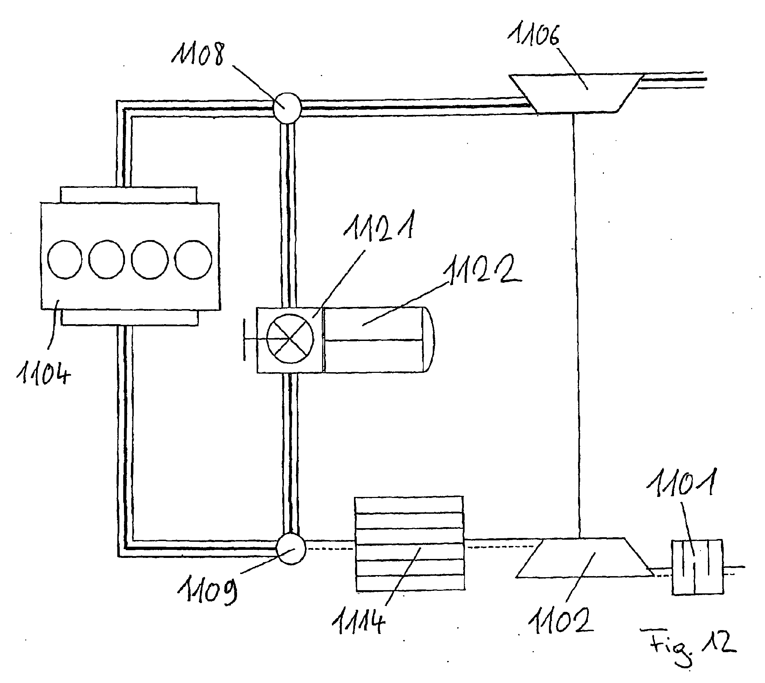

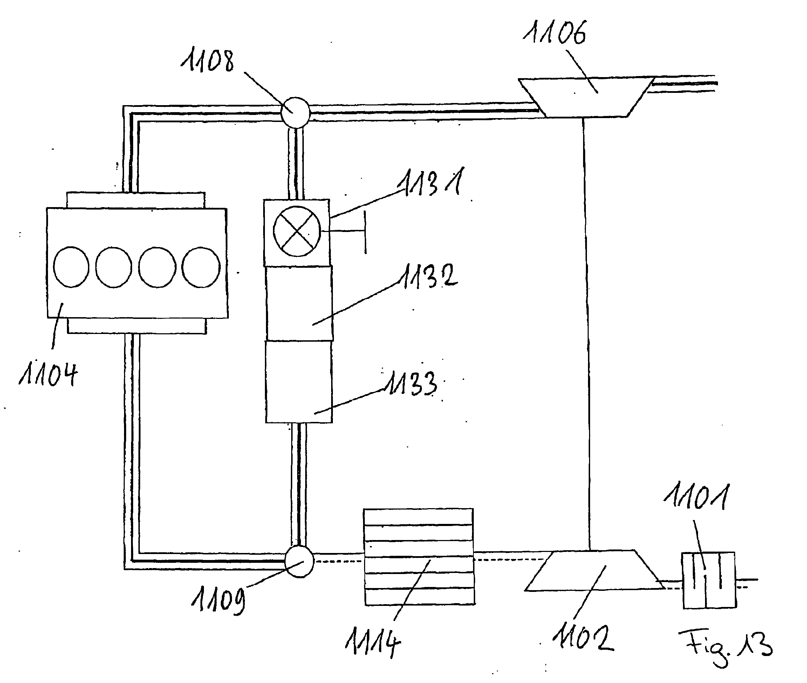

Die in den Figuren 12 und 13 dargestellten Hochdruck-Abgasrückführsysteme ähneln dem in Fig. 11 dargestellten Abgasrückführsystem. Zur Bezeichnung gleicher Teile werden gleiche Bezugszeichen verwendet. Um Wiederholungen zu vermeiden, wird auf die vorangegangene Beschreibung der Fig. 11 verwiesen. Im Folgenden wird nur auf die Unterschiede zwischen den einzelnen Ausführungsbeispielen eingegangen.

Bei dem in Fig. 12 dargestellten Hochdruck-Abgasrückführsystem ist zwischen die Entnahmestelle 1108 und die Rückführstelle 1109 ein erfindungsgemäßes Wärmeübertragerventil 1121 geschaltet, das auch als Kombinationsventil bezeichnet wird. Das Kombinationsventil 1121 steht mit einem U-Flow-Kühler in Verbindung. Je nach Schaltstellung des Kombinationsventils 1121 gelangt das rückgeführte Abgas entweder direkt durch das Kombinationsventil 1121 ungekühlt von der Entnahmestelle 1108 zur Rückführstelle 1109, oder das rückgeführte Abgas wird mittels des Kombinationsventils in den U-Flow-Kühler geleitet, in dem U-Flow-Kühler 1122 gekühlt und gelangt dann erst zur Rückführstelle 1109.

Bei dem in Fig. 13 dargestellten Hochdruck-Abgasrückführsystem ist zwischen der Entnahmestelle 1108 und der Rückführstelle 1109 ein Kombinationsventil 1131 mit einer zweistufigen Abkühleinrichtung angeordnet, die einen Hochtemperatur-Abgaskühler 1132 und einen Niedertemperatur-Abgaskühler 1133 umfasst.

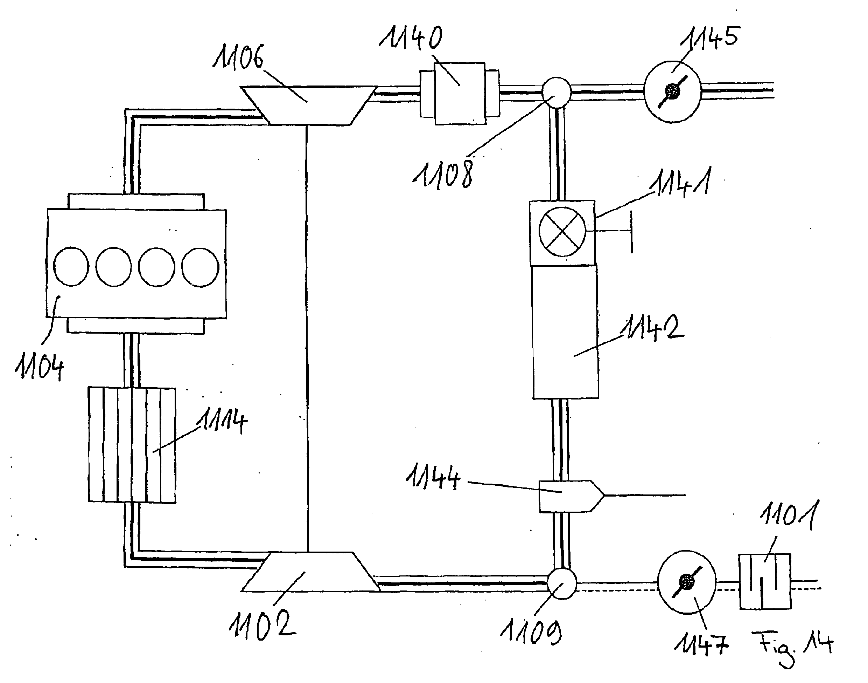

In den Figuren 14 bis 16 sind verschiedene Ausführungsbeispiele eines Niederdruck-Abgasrückführsystems vereinfacht dargestellt. Das Kraftstoff-Luftgemisch wird über einen Luftfilter 1101 von einem Verdichter 1102 angesaugt und einem Motor 1104 zugeführt. Das Abgas des Motors 1104 wird in einer Turbine 1106 entspannt, die den Verdichter 1102 antreibt. Stromabwärts der Turbine 1106 ist eine Entnahmestelle 1108 angeordnet, die mit einer Rückführstelle 1109 in Verbindung steht. Die Rückführstelle 1109 ist stromaufwärts des Verdichters 1102 angeordnet. Zwischen den Verdichter 1102 und den Motor 1104 ist ein Ladeluftkühler 1114 geschaltet. Zwischen die Turbine 1106 und die Entnahmestelle 1108 ist ein Dieselpartikelfilter 1140 mit Oxidationskatalysator geschaltet. Zwischen die Entnahmestelle 1108 und die Rückführstelle 1109 ist ein Wärmeübertragerventil 1141, das auch als Kombinationsventil bezeichnet wird, geschaltet. Das Kombinationsventil 1141 steht mit einem Abgaskühler 1142 in Verbindung, der mit einem Bypass ausgestattet ist. Zwischen den Abgaskühler 1142 und die Rückführstelle 1109 ist ein Kondensatabscheider 1144 geschaltet. In Strömungsrichtung im Anschluss an die Entnahmestelle 1108 ist ein Abgasgegendruckventil 1145 angeordnet. Zwischen die Rückführstelle 1109 und den Luftfilter 1101 ist eine Ladeluftdrossel 1147 geschaltet.

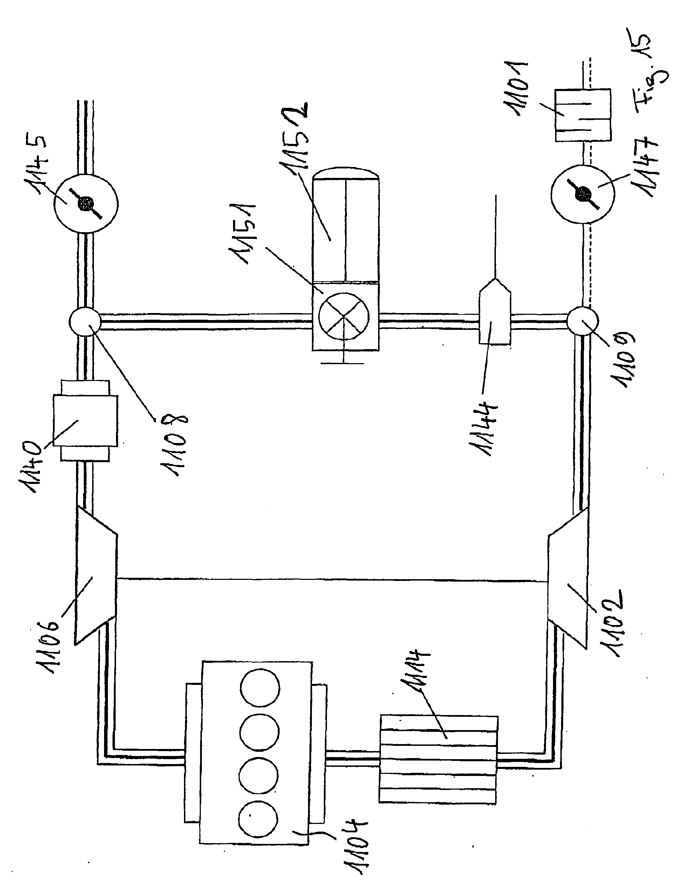

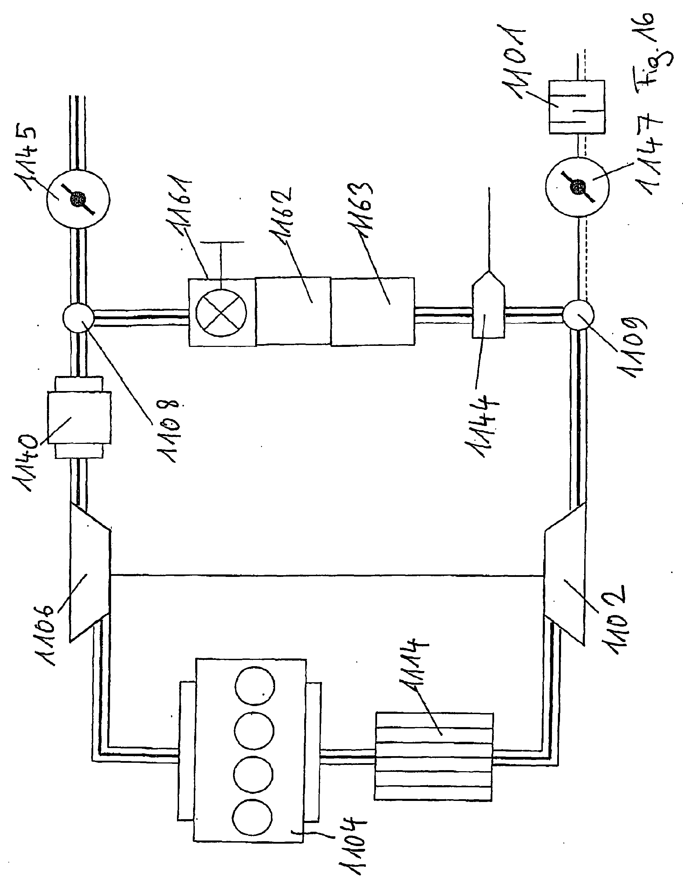

In den Figuren 15 und 16 sind ähnliche Niederdruck-Abgasrückführsysteme wie in Fig. 14 dargestellt. Zur Bezeichnung gleicher Teile werden gleiche Bezugszeichen verwendet. Um Wiederholungen zu vermeiden, wird auf die vorangegangene Beschreibung der Fig. 14 verwiesen. Im Folgenden wird nur auf die Unterschiede zwischen den einzelnen Ausführungsbeispielen eingegangen.

Bei dem in Fig. 15 dargestellten Ausführungsbeispiel ist zwischen die Entnahmestelle 1108 und die Rückführstelle 1109 ein Wärmeübertragerventil 1151, das auch als Kombinationsventil bezeichnet wird, geschaltet. Das Kombinationsventil 1151 steht mit einem U-Flow-Kühler 1152 in Verbindung. Je nach Schaltstellung des Kombinationsventils 1151 gelangt das rückgeführte Abgas entweder direkt durch das Kombinationsventil 1151 ungekühlt von der Entnahmestelle 1108 zur Rückführstelle 1109, oder das rückgeführte Abgas wird mittels des Kombinationsventils in den U-Flow-Kühler 1152 geleitet, in dem U-Flow-Kühler 1152 gekühlt und gelangt dann erst zur Rückführstelle 1109.

Bei dem in Fig. 16 dargestellten Ausführungsbeispiel sind zwischen die Entnahmestelle1108 und die Rückführstelle 1109 ein Kombinationsventil 1161 mit einer zweistufigen Abkühleinrichtung angeordnet, die einen Hochtemperatur-Abgaskühler 1162 und einen Niedertemperatur-Abgaskühler 1163 umfasst.

## Patentansprüche

1. Drehkolbenventil (1; 101) zur Regelung der Temperatur und der Quantität des zurückgeführten Abgases bei Verbrennungsmotoren, mit einem Ventilgehäuse (2; 102) und einem in demselben angeordneten Regelungselement (3), welches mit einem im Ventilgehäuse (2; 102) ausgebildeten Ventilsitz (14) zur Regelung der Durchströmung eines Fluids zusammenwirkt und das drehbar im Ventilgehäuse (2; 102) gelagert ist, wobei das drehbar im Ventilsitz (7) angeordnete Regelungselements (3) derart ausgelegt ist, dass es die Durchflussmenge des durch eine erste Öffnung (4) dem Ventil (1) zugeführten Fluids in einem ersten Winkelstellungsbereich bei verschlossener zweiter Öffnung (5) in Form einer reinen Durchflussregelung zu einer dritten Öffnung (6), in einem anschließenden, zweiten Winkelbereich in Form einer Regelung der Fluidverteilung auf die zweite und dritte Öffnung (5 und 6) und im hieran anschließenden dritten Winkelbereich in Form einer reinen Regelung des freien Querschnitts der zweiten Öffnung (5) bei vollständig geschlossener dritter Öffnung (6) regelt, **dadurch gekennzeichnet, dass** der Zusammenhang zwischen der Winkelstellung des Regelelements (3) und dem für das Durchströmen des Fluids freigegebenen Querschnitt im Bereich des ersten Winkelbereichs und/oder des dritten Winkelbereichs im Wesentlichen linear ist und das Regelungselement (3) eine konische Mantelfläche aufweist.

2. Drehkolbenventil nach Anspruch 1, **gekennzeichnet durch** ein absolutes Maximum des freigegebenen Querschnitts zwischen dem ersten und dem zweiten Winkelbereich.

3. Drehkolbenventil nach einem der Ansprüche 1 oder 2, **dadurch gekennzeichnet, dass** im zweiten Winkelbereich der insgesamt freigegebene Querschnitt im Wesentlichen konstant ist.

4. Drehkolbenventil nach einem der Ansprüche 1 bis 3, **dadurch gekennzeichnet, dass** die konische Mantelfläche (10) des Regelelements (3) die erste Öffnung (4) ganz oder teilweise verschließt oder freigibt.

5. Abgasrückführsystem mit einer Brennkraftmaschine, insbesondere einem Motor, der beziehungsweise dem an einer Entnahmestelle (1108) abgezweigtes und über eine Rückführstelle (1109) zurückgeführtes Abgas zugeführt wird, **dadurch gekennzeichnet, dass** zwischen die Entnahmestelle (1108) und die Rückführstelle (1109) eine Wärmeübertragerventileinrichtung (1111, 1121, 1131, 1141, 1151, 1161) mit einem Ventil (1); 101) nach einem der Ansprüche 1 bis 4 geschaltet ist.

6. Abgasrückführsystem nach Anspruch 5, **dadurch gekennzeichnet, dass** die Wärmeübertragerventileinrichtung (1111, 1121, 1131, 1141, 1151, 1161) mit einer Abgaskühleinrichtung (1112, 1122, 1132, 1133, 1142, 1152, 1162, 1163) verbunden ist.

7. Abgasrückführsystem nach Anspruch 5 oder 6, **dadurch gekennzeichnet, dass** die Wärmeübertragerventileinrichtung (1111, 1121, 1131, 1141, 1151, 1161) in die Abgaskühleinrichtung (1112, 1122, 1132, 1133, 1142, 1152, 1162, 1163) integriert ist.

8. Abgasrückführsystem nach einem der Ansprüche 5 bis 7, **dadurch gekennzeichnet, dass** die Wärmeübertragerventileinrichtung (1111, 1121, 1131, 1141, 1151, 1161) stoffschlüssig mit der Abgaskühleinrichtung (1112, 1122, 1132, 1133, 1142, 1152, 1162, 1163) verbunden ist.

9. Abgasrückführsystem nach einem der Ansprüche 5 bis 9, **dadurch gekennzeichnet, dass** die Abgaskühleinrichtung (1112, 1132, 1133, 1142; 1162,1163) einen Bypass aufweist.

10. Abgasrückführsystem nach einem der Ansprüche 5 bis 9, **dadurch gekennzeichnet, dass** die Abgaskühleinrichtung (1122; 1152) einen U-Flow-Kühler umfasst.

11. Abgasrückführsystem nach einem der Ansprüche 5 bis 10, **dadurch gekennzeichnet, dass** die Wärmeübertragerventileinrichtung (1111, 1121, 1131, 1141, 1151, 1161), in Strömungsrichtung von der Entnahmestelle (1108) zu der Rückführstelle (1109) betrachtet, stromaufwärts zu der Abgaskühleinrichtung (1112, 1122, 1132, 1133, 1142, 1152, 1162, 1163) angeordnet ist.

12. Abgasrückführsystem nach einem der Ansprüche 5 bis 11, **dadurch gekennzeichnet, dass** die Wärmeübertragerventileinrichtung (1111, 1121, 1131, 1141, 1151, 1161), in Strömungsrichtung von der Entnahmestelle (1108) zu der Rückführstelle (1109) betrachtet, stromabwärts zu der Abgaskühleinrichtung (1112, 1122, 1132, 1133, 1142, 1152, 1162, 1163) angeordnet ist.

13. Abgasrückführsystem nach einem der Ansprüche 5 bis 12, **dadurch gekennzeichnet, dass** die Wärmeübertragerventileinrichtung (1131, 1161) einen Hochtemperatur-Abgaskühler (1132, 1162) und einen Niedertemperatur-Abgaskühler (1133, 1163) umfasst.

14. Abgasrückführsystem nach einem der Ansprüche 5 bis 13, **dadurch gekennzeichnet, dass** die Wärmeübertragerventileinrichtung (1131, 1161), in Strömungsrichtung von der Entnahmestelle (1108) zu der Rückführstelle (1109) betrachtet, stromaufwärts oder stromabwärts zu dem Hochtemperatur-Abgaskühler (1132, 1162) oder dem Niederdruckabgaskühler (1133, 1163) angeordnet ist.

15. Abgasrückführsystem nach einem der Ansprüche 5 bis 14, **dadurch gekennzeichnet, dass** das Abgasrückführsystem von einem Hochdruck-Abgasrückführsystem gebildet wird.

16. Abgasrückführsystem nach einem der Ansprüche 5 bis 14, **dadurch gekennzeichnet, dass** das Abgasrückführsystem von einem Niederdruckabgasrückführsystem gebildet wird.

## Claims

1. Rotary piston valve (1; 101) for regulating the temperature and quantity of the returned exhaust gas in internal combustion engines, with a valve housing (2; 102) and with a regulation element (3) which is arranged in the latter and which cooperates with a valve seat (14) formed in the valve housing (2; 102), for regulating the throughflow of a fluid, and which is mounted rotatably in the valve housing (2; 102), wherein the regulation element (3) arranged rotatably in the valve seat (7) is designed in such a way that it regulates the throughflow quantity of the fluid supplied to the valve (1) through a first port (4), in a first angular position range, with the second port (5) closed, in the form of straightforward throughflow regulation to a third port (6), in a subsequent second angular range, in the form of a regulation of the fluid distribution to the second and the third port (5 and 6) and, in the following third angular range, in the form of straightforward regulation of the free cross section of the second port (5), with the third port (6) completely closed, **characterized in that** the relation between the angular position of the regulation element (3) and the cross section released for the throughflow of the fluid is essentially linear in the region of the first angular range and/or of the third angular rangeand that the regulation element (3) has a conical surface area.

2. Rotary piston valve as claimed in claim 1, **characterized by** an absolute maximum of the released cross section between the first and the second angular range.

3. Rotary piston valve as claimed in one of claims 1 or 2, **characterized in that** the cross section released overall is essentially constant in the second angular range.

4. Rotary piston valve as claimed in one of claims 1 to 3, **characterized in that** the conical surface area (10) of the regulation element (3) completely or partially closes or releases the first port (4).

5. An exhaust gas return system with an internal combustion engine, especially an engine, which is supplied with exhaust gas branched off at an extraction point (1108) and returned via a return point (1009), **characterized in that** a heat exchanger valve device (1111, 1121, 1131, 1141, 1151, 1161) with a valve (1; 101) as claimed in one of claims 1 to 18 is inserted between the extraction point (1108) and the return point (1109) according to one of claims 1 to 4.

6. The exhaust gas return system as claimed in claim 5, **characterized in that** the heat exchanger valve device (1111, 1121, 1131, 1141, 1151, 1161) is connected to an exhaust gas cooling device (1112, 1122, 1132, 1133, 1142, 1152, 1162, 1163).

7. The exhaust gas return system as claimed in claim 5 or 6, **characterized in that** the heat exchanger valve device (1111, 1121, 1131, 1141, 1151, 1161) is integrated into the exhaust gas cooling device (1112, 1122, 1132, 1133, 1142, 1152, 1162, 1163).

8. The exhaust gas return system as claimed in one of claims 5 to 7, **characterized in that** the heat exchanger valve device (1111, 1121, 1131, 1141, 1151, 1161) is connected in a materially integral manner to the exhaust gas cooling device (1112, 1122, 1132, 1133, 1142, 1152, 1162, 1163).

9. The exhaust gas return system as claimed in one of claims 5 to 9, **characterized in that** the exhaust gas cooling device (1112, 1132, 1133, 1142; 1162, 1163) has a bypass.

10. The exhaust gas return system as claimed in one of claims 5 to 9, **characterized in that** the exhaust gas cooling device (1122; 1152) comprises a U-flow cooler.

11. The exhaust gas return system as claimed in one of claims 5 to 10, **characterized in that** the heat exchanger valve device (1111, 1121, 1131, 1141, 1151, 1161) is arranged upstream of the exhaust gas cooling device (1112, 1122, 1132, 1133, 1142, 1152, 1162, 1163), as seen in the flow direction from the extraction point (1108) to the return point (1109).

12. The exhaust gas return system as claimed in one of claims 5 to 11, **characterized in that** the heat exchanger valve device (1111, 1121, 1131, 1141, 1151, 1161) is arranged downstream of the exhaust gas cooling device (1112, 1122, 1132, 1133, 1142, 1152, 1162, 1163), as seen in the flow direction from the extraction point (1108) to the return point (1109).

13. The exhaust gas return system as claimed in one of claims 5 to 12, **characterized in that** the heat exchanger valve device (1131, 1161) comprises a high-temperature exhaust gas cooler (1132, 1162) and a low-temperature exhaust gas cooler (1133, 1163).

14. The exhaust gas return system as claimed in one of claims 5 to 13, **characterized in that** the heat exchanger valve device (1131, 1161) is arranged upstream or downstream of the high-temperature exhaust gas cooler (1132, 1162) or of the low-pressure exhaust gas cooler (1133, 1163), as seen in the flow direction from the extraction point (1108) to the return point (1109).

15. The exhaust gas return system as claimed in one of claims 5 to 14, **characterized in that** the exhaust gas return system is formed by a high-pressure exhaust gas return system.

16. The exhaust gas return system as claimed in one of claims 19 to 28, **characterized in that** the exhaust gas return system is formed by a low-pressure exhaust gas return system.

## Revendications

1. Soupape à piston rotatif (1 ; 101) servant à la régulation de la température et de la quantité de gaz d'échappement recyclés concernant des moteurs à combustion interne, comprenant une cage de soupape (2 ; 102) et un élément de régulation (3) disposé dans ladite cage de soupape, élément de régulation qui fonctionne de façon conjuguée avec un siège de soupape (14) configuré dans la cage de soupape (2 ; 102), ledit élément servant à la régulation de l'écoulement d'un fluide, et qui est monté en rotation dans la cage de soupape (2 ; 102), où l'élément de régulation (3) disposé en rotation dans le siège de soupape (7) est conçu de manière telle, qu'il régule le débit du fluide fourni à la soupape (1) par une première ouverture (4), suivant une première plage de position angulaire, ladite régulation, la deuxième ouverture (5) étant fermée, se produit sous la forme d'une régulation pure de l'écoulement vers une troisième ouverture (6), ladite régulation, suivant une deuxième plage angulaire qui fait suite, se produit sous la forme d'une régulation de la répartition de fluide à la deuxième et à la troisième ouverture (5 et 6) et, suivant la troisième plage angulaire qui fait suite, se produit sous la forme d'une régulation pure de la section libre de la deuxième ouverture (5), la troisième ouverture (6) étant complètement fermée,
**caractérisée en ce que** le rapport entre la position angulaire de l'élément de régulation (3) et la section dégagée pour le passage du fluide, dans la zone de la première plage angulaire et / ou de la troisième plage angulaire, est sensiblement linéaire, et l'élément de régulation (3) comporte une surface latérale conique.

2. Soupape à piston rotatif selon la revendication 1, **caractérisée par** un maximum absolu de la section dégagée entre la première et la deuxième plage angulaire.

3. Soupape à piston rotatif selon l'une ou l'autre des revendications 1 et 2, **caractérisée en ce que**, dans la deuxième plage angulaire, la section dégagée, dans son ensemble, est sensiblement constante.

4. Soupape à piston rotatif selon l'une quelconque des revendications 1 à 3, **caractérisée en ce que** la surface latérale conique (10) de l'élément de régulation (3) ferme ou ouvre, en totalité ou en partie, la première ouverture (4).

5. Système de recyclage des gaz d'échappement concernant une machine à combustion interne, en particulier un moteur, à laquelle ou auquel sont fournis des gaz d'échappement déviés au niveau d'un point de captage (1108) et réintroduits via un point de recyclage (1109), **caractérisé en ce qu'**un dispositif de soupape d'échangeur de chaleur (1111, 1121, 1131, 1141, 1151, 1161) est commandé, entre le point de captage (1108) et le point de recyclage (1109), avec une soupape (1 ; 101) selon l'une quelconque des revendications 1 à 4.

6. Système de recyclage des gaz d'échappement selon la revendication 5, **caractérisé en ce que** le dispositif de soupape d'échangeur de chaleur (1111, 1121, 1131, 1141, 1151, 1161) est assemblé avec un dispositif de refroidissement des gaz d'échappement (1112, 1122, 1132, 1133, 1142, 1152, 1162, 1163).

7. Système de recyclage des gaz d'échappement selon la revendication 5 ou 6, **caractérisé en ce que** le dispositif de soupape d'échangeur de chaleur (1111, 1121, 1131, 1141, 1151, 1161) est intégré au dispositif de refroidissement des gaz d'échappement (1112, 1122, 1132, 1133, 1142, 1152, 1162, 1163).

8. Système de recyclage des gaz d'échappement selon l'une quelconque des revendications 5 à 7, **caractérisé en ce que** le dispositif de soupape d'échangeur de chaleur (1111, 1121, 1131, 1141, 1151, 1161) est assemblé, par continuité de matière, avec le dispositif de refroidissement des gaz d'échappement (1112, 1122, 1132, 1133, 1142, 1152, 1162, 1163).

9. Système de recyclage des gaz d'échappement selon l'une quelconque des revendications 5 à 8, **caractérisé en ce que** le dispositif de refroidissement des gaz d'échappement (1112, 1132, 1133, 1142 ; 1162, 1163) comporte une dérivation.

10. Système de recyclage des gaz d'échappement selon l'une quelconque des revendications 5 à 9, **caractérisé en ce que** le dispositif de refroidissement des gaz d'échappement (1122 ; 1152) comprend un refroidisseur de flux en U,

11. Système de recyclage des gaz d'échappement selon l'une quelconque des revendications 5 à 10, **caractérisé en ce que** le dispositif de soupape d'échangeur de chaleur (1111, 1121, 1131, 1141, 1151, 1161), vu dans la direction d'écoulement en partant du point de captage (1108) vers le point de recyclage (1109), est disposé en amont du dispositif de refroidissement des gaz d'échappement (1112, 1122, 1132, 1133, 1142, 1152, 1162, 1163).

12. Système de recyclage des gaz d'échappement selon l'une quelconque des revendications 5 à 11, **caractérisé en ce que** le dispositif de soupape d'échangeur de chaleur (1111, 1121, 1131, 1141, 1151, 1161), vu dans la direction d'écoulement en partant du point de captage (1108) vers le point de recyclage (1109), est disposé en aval du dispositif de refroidissement des gaz d'échappement (1112, 1122, 1132, 1133, 1142, 1152, 1162, 1163).

13. Système de recyclage des gaz d'échappement selon l'une quelconque des revendications 5 à 12, **caractérisé en ce que** le dispositif de soupape d'échangeur de chaleur (1131, 1161) comprend un refroidisseur des gaz d'échappement à haute température (1132, 1162) et un refroidisseur des gaz d'échappement à basse température (1133, 1163).

14. Système de recyclage des gaz d'échappement selon l'une quelconque des revendications 5 à 13, **caractérisé en ce que** le dispositif de soupape d'échangeur de chaleur (1131, 1161), vu dans la direction d'écoulement en partant du point de captage (1108) vers le point de recyclage (1109), est disposé en amont ou en aval du refroidisseur de gaz d'échappement à haute température (1132, 1162) ou du refroidisseur de gaz d'échappement à basse pression (1133, 1163).

15. Système de recyclage des gaz d'échappement selon l'une quelconque des revendications 5 à 14, **caractérisé en ce que** le système de recyclage des gaz d'échappement est formé par un système de recyclage des gaz d'échappement à haute pression.

16. Système de recyclage des gaz d'échappement selon l'une quelconque des revendications 5 à 14, **caractérisé en ce que** le système de recyclage des gaz d'échappement est formé par un système de recyclage des gaz d'échappement à basse pression.
